(19) Europäisches Patentamt
European Patent Office
Office européen des brevets

(11) **EP 2 629 439 B1**

(12) **FASCICULE DE BREVET EUROPEEN**

(45) Date de publication et mention
de la délivrance du brevet:
**08.04.2015 Bulletin 2015/15**

(51) Int Cl.:
**H04B 17/00** *(2015.01)*    **H01Q 1/28** *(2006.01)*
**H01Q 3/00** *(2006.01)*

(21) Numéro de dépôt: **13155208.5**

(22) Date de dépôt: **14.02.2013**

(54) **Procédé de génération d'un diagramme d'émission ou de réception d'une antenne d'un satellite**

Verfahren zur Erzeugung eines Sende- oder Empfangsdiagramms einer Satellitenantenne

Method for generating an emitting or receiving membrane of a satellite antenna

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2012 FR 1251439
17.04.2012 FR 1253528**

(43) Date de publication de la demande:
**21.08.2013 Bulletin 2013/34**

(73) Titulaire: **Eutelsat S.A.**
**75015 Paris (FR)**

(72) Inventeur: **Le Pera, Alessandro**
**92130 Issy Les Moulineaux (FR)**

(74) Mandataire: **Lebkiri, Alexandre**
**Cabinet Camus Lebkiri**
**25, Rue de Maubeuge**
**75009 Paris (FR)**

(56) Documents cités:
**EP-A2- 1 032 141      US-A- 5 697 050
US-A1- 2005 007 275      US-A1- 2010 315 288**

## Description

### DOMAINE

Le domaine de l'invention concerne les méthodes de mesures de puissance et de diagrammes d'émission d'une antenne. Notamment, le domaine de l'invention concerne les tests d'émissions et réceptions d'une antenne d'un satellite pour l'établissement d'une cartographie représentant une zone de couverture terrestre pour la diffusion de données. Plus particulièrement, l'invention se rapporte aux méthodes de tests des niveaux d'amplification des antennes satellites de manière à valider une qualité de service sur une zone de couverture lorsque le satellite est opérationnel.

### ETAT DE L'ART

Une problématique des tests d'antennes de satellites, tels que les tests permettant de vérifier les diagrammes de rayonnement et les niveaux d'émission, se pose dès lors que les mesures doivent se faire dans une configuration opérationnelle, c'est-à-dire lorsque le satellite est en orbite.

Lorsque les satellites atteignent une orbite opérationnelle, il est nécessaire d'évaluer leurs performances, notamment après les phases de lancement, de vol et de mise sur orbite. En effet, ces dernières phases peuvent induire des dégradations systèmes et de performances sur les équipements permettant d'assurer les communications du satellite.

Il est donc important de conduire une série de tests sur les aspects opérationnels et de performances des équipements de télécommunications du satellite avant leur mise en fonctionnement.

Un des tests importants consiste à valider la zone de couverture terrestre des émissions et réceptions satellites. En effet, un service est proposé à un ensemble de pays et le satellite doit en conséquence permettre d'assurer la diffusion et la réception de données dans cette couverture avec une qualité de service adéquate.

De nombreuses méthodes existent à ce jour. En revanche, certaines méthodes comprennent des tests qui définissent de forts niveaux de puissance à émettre en direction du satellite, d'autres tests nécessitent l'émission de fortes puissances par le satellite. Les signaux de tests reçus par une station terrestre permettent notamment de qualifier la qualité des signaux émis et/ou reçus par le satellite, la directivité de l'antenne, la couverture de l'antenne, les niveaux admissibles, les saturations, etc.

Les tests permettant de vérifier les diagrammes de rayonnement d'antennes peuvent être réalisés de différentes manières.

En général, pour une orientation d'antenne donnée, un test de puissance est effectué à un point fixe de la terre. Puis l'orientation de l'antenne testée est modifiée et un nouveau test est reconduit pour cette nouvelle orientation de l'antenne. Le diagramme d'une antenne est ainsi réalisé. Le test complet de la réalisation d'un diagramme d'antenne peut donc se dérouler sur une durée relativement importante pour balayer la totalité d'un secteur échantillonné.

Certaines méthodes permettent d'établir dans un premier temps le diagramme de l'antenne de réception d'un satellite et dans un second temps le diagramme de l'antenne d'émission du même satellite. Les tests peuvent donc se dérouler sur une durée assez longue.

Deux méthodes de l'art antérieur sont décrites ci-après, chacune de ces méthodes permettant de calculer le diagramme de l'antenne de réception et d'émission du satellite dans une liaison bout en bout dans laquelle un signal émis d'une station au sol vers le satellite est réémis vers la station au sol depuis le satellite, le satellite jouant le rôle d'un transpondeur ou d'un répéteur.

Une première méthode consiste à définir un gain fixe dans la chaine d'amplification du satellite et de piloter depuis une station terrestre la puissance du signal émis vers le satellite.

Concernant la voie montante, cette méthode permet d'asservir le gain de l'émetteur de la station au sol de manière à maintenir une puissance à saturation en sortie de l'émetteur du satellite.

Cette première méthode utilise un mode de la chaine d'amplification dit « FGM », signifiant « Fixed Gain mode » dans la terminologie anglo-saxonne.

Pour chaque orientation de l'antenne de réception et l'antenne d'émission du satellite, un test de puissance est réalisé. Un signal est émis depuis une station terrestre dont l'amplification est pilotée pour obtenir une puissance de sortie à saturation au niveau de l'émetteur du satellite.

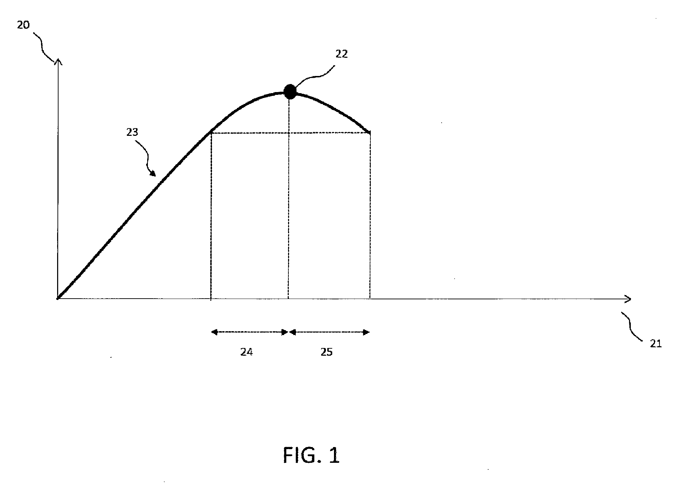

La figure 1 représente la puissance 23 du signal en sortie de l'émetteur du satellite dans un référentiel dans lequel : en ordonnées 20 est représenté le niveau de puissance du signal et en abscisses 21 est représenté le gain de la chaine d'amplification du signal reçu par le satellite.

Cette méthode permet de définir comme point de référence dans la liaison bout-en-bout testée, un signal à saturation en sortie de l'antenne d'émission de l'émetteur. Un avantage de cette méthode est qu'elle permet de trouver facilement le point de saturation 22, étant donné que la pente 24 du niveau de puissance est positive avant le point de saturation et la pente 25 est négative après. Le point de saturation peut être calculé par l'estimation d'une valeur médiane de deux calculs de part et d'autre du point de saturation lorsque deux valeurs identiques de puissance sont trouvées.

La puissance du signal émis par l'émetteur d'une station au sol est pilotée pour obtenir le point de saturation en sortie de l'émetteur du satellite. Pour chacune des orientations de l'antenne de réception du satellite testée, la puissance du signal émis de l'émetteur au sol est adaptée pour trouver le point de saturation en sortie de la chaine d'amplification du satellite.

La méthode permet de déduire le diagramme de l'antenne de réception pour un ensemble d'orientations prédéfinies en effectuant les mesures de l'écart de puissance à l'émission de la liaison montante vers le satellite.

L'antenne, étant orientée dans une première orientation, émet un signal à son niveau de puissance maximal, soit pour une PIRE maximale ; la PIRE est également appelée EIRP dans la terminologie anglo-saxonne, sa définition étant rappelée ci-dessous.

Dans un système de communication radio la puissance isotrope rayonnée équivalente notée PIRE ou EIRP en anglais, est définie dans la direction de l'antenne où la puissance émise est maximale. C'est la puissance qu'il faudrait appliquer à une antenne isotrope pour obtenir le même champ dans cette direction. Pour une antenne connectée directement à l'émetteur :

PIRE [dBm] = Puissance électrique appliquée à l'antenne [dBm] + Gain de l'antenne [dBi]
PIRE [W] = Puissance électrique appliquée à l'antenne [W] * Gain de l'antenne.

La chaine d'amplification est donc commandée de telle manière qu'elle soit réglée à saturation du niveau d'amplification par un gain fixe.

Concernant la voie descendante, pour chaque orientation de l'antenne du satellite, la station terrestre reçoit et analyse alors les variations du EIRP. L'analyse des variations de puissances au sol permet d'établir pour chacune des orientations données de l'antenne d'émission du satellite un diagramme de l'antenne en émission correspondant à une zone de couverture.

Les mouvements de l'antenne, en roulis et en lacet peuvent être définis selon un plan de tests correspondant à une zone à couvrir.

Les points de mesure se faisant dans une station terrestre équipée d'une antenne adaptée, les niveaux de puissances et les diagrammes des antennes de réception et d'émission du satellite peuvent alors être calculés entièrement.

Les niveaux de puissances en sortie de la chaine d'amplification dans la zone proche de la saturation peuvent être contrôlés à partir d'une liaison de télécommande entre la station au sol et le satellite.

Le niveau d'amplification du signal émis au sol vers le satellite pour provoquer la saturation en sortie de la chaine d'amplification du satellite donne naturellement une indication d'orientation de l'antenne de réception du satellite par mesure de l'écart entre un niveau d'amplification nominal de référence et celui mesuré pour une orientation donnée.

La mesure du signal amplifié au sol pour un gain fixe dans la chaine du satellite donne le diagramme d'antenne en réception du satellite par la restitution des niveaux d'amplification de la chaine du satellite pour chacune des orientations.

Lorsque le satellite a réalisé une émission pour une orientation donnée de l'antenne, le satellite modifie la consigne d'orientation de l'antenne et réémet un signal de manière à établir une nouvelle mesure. Le diagramme de rayonnement de l'antenne peut ainsi être mesuré en un point de la planète de manière à établir une cartographie correspondant à la zone de couverture des antennes de réception et d'émission du satellite.

Le diagramme de rayonnement de l'antenne peut :

- soit être établi à partir d'un plan de tests prédéfinis établissant les différentes séquences de tests en émission et la séquence des mouvements des orientations d'antenne,
- soit être asservi par des commandes au sol définissant le plan de test.

Dans une seconde méthode, le gain de la chaine d'amplification du satellite est variable. Notamment, au moins un amplificateur comprend un gain variable. Cet amplificateur est noté ALC, et signifie dans la terminologie anglo-saxonne « Automatic Level Control ». Cet amplificateur permet de maintenir une puissance de sortie constante quel que soit le niveau du signal d'entrée. Le gain est donc automatiquement ajusté de manière à assurer une puissance en sortie constante.

Concernant la voie montante, c'est-à-dire du sol vers le satellite, et les tests de diagramme de l'antenne de réception du satellite, la mesure de l'amplification nécessaire du signal reçu à l'antenne de réception du satellite pour obtenir une puissance donnée en sortie de la chaine d'amplification permet de déduire une donnée de rayonnement de l'antenne.

L'amplification des signaux au sein du satellite est pilotée dynamiquement. Les écarts de puissance reçue au niveau de l'antenne de réception du satellite sont compensés pour maintenir un niveau de puissance fixe en sortie de la chaine d'amplification.

Ainsi il est possible de mesurer les variations de gain appliqué au niveau de la chaine d'amplification du satellite pour en déduire le diagramme de l'antenne en réception, le test pouvant être réalisé pour un ensemble d'orientations de ladite antenne.

Dans cette seconde méthode, la puissance en sortie de la chaine d'amplification du satellite n'est pas nécessairement maintenue à un niveau de saturation, en revanche elle doit être fixée à une valeur prédéfinie pour toute la séquence de tests.

Il est important de pouvoir réaliser ces tests sur n'importe quelle orbite et en minimisant les contraintes appliquées sur le satellite qui sont couteuses et parfois difficiles à réaliser. Or le satellite peut être dans une position et une orientation qui nécessitent de prendre en considération son environnement proche. Notamment, les émissions et réceptions des satellites voisins sont parfois une donnée contraignante dans l'élaboration de tests de télécommunication réalisés sur un satellite.

Un des principaux inconvénients provient des interférences avec des systèmes de transmissions tiers entre les liaisons montantes et/ou descendantes lors de la réalisation des tests d'établissement des diagrammes d'antennes.

Des premiers inconvénients résultent des dégradations causées à d'autres systèmes de transmission par les émissions provenant du sol vers le satellite.

Un problème des solutions actuelles réside dans le fait que, lors de tests réalisés après la mise en orbite d'un premier satellite, une station terrestre émet un signal de forte puissance, notamment dans la première méthode décrite puisque la puissance est asservie sur le niveau de puissance en sortie de l'émetteur du satellite. Ce signal à forte puissance est susceptible d'interférer avec d'autres systèmes. Pour réaliser les tests d'amplification, de manière à assurer le respect des contraintes d'émission et de réception sur une zone de couverture donnée, une forte puissance est nécessaire.

Concernant les liaisons montantes d'une station terrestre vers un satellite, les émissions peuvent être à fortes puissances dans des canaux prédéfinis. Ces canaux sont parfois déjà utilisés car ils sont également réservés par d'autres opérateurs utilisant d'autres systèmes. Notamment, ces derniers systèmes peuvent concerner d'autres satellites qui peuvent se situer à proximité du satellite testé.

Les transmissions sont alors susceptibles de dégrader la réception et la qualité de service des transmissions d'autres satellites à proximité.

Ces transmission peuvent causées des interférences avec d'autres signaux reçus par des satellites tiers et voisins qui peuvent dégrader leurs réceptions. Ceci peut se produire lorsqu'un satellite tiers utilise la même bande de fréquences, ou utilise une bande adjacente ou un canal d'une harmonique. Notamment, les interférences nuisent aux performances générales de la qualité de service et doivent être évitées.

Dans les liaisons descendantes, l'antenne d'émission du satellite est configurée de manière à être dans un mode d'émission à puissance fixe. Notamment, selon la première méthode, la puissance est à saturation donc les signaux sont émis à forte puissance.

Dans ces conditions, les tests permettant de mesurer le diagramme des antennes d'émissions du satellite peuvent provoquer des interférences avec des systèmes voisins tels que d'autres satellites utilisant le même canal ou un canal adjacent. Ceci peut nuire aux transmissions de systèmes tiers mais peut également nuire lors de la récupération des signaux en réception au niveau d'une station terrestre.

Enfin des liaisons montantes peuvent potentiellement interférer avec des liaisons descendantes sur le même canal de transmission.

Des seconds inconvénients résultent des interférences causées par d'autres systèmes aux antennes testées pour l'établissement des diagrammes de rayonnement des antennes.

Dans les liaisons montantes, lorsque l'antenne du récepteur d'un satellite capte des signaux entrants à fortes puissances, la sensibilité de ses filtres en réception est « poussée » de manière à affiner la mesure des variations d'amplitudes des signaux reçus.

Le récepteur est alors susceptible de recevoir des émissions parasites de systèmes de transmission voisins. Les émissions parasites peuvent induire des changements de niveaux de puissance en sortie et dégrader la précision des mesures lors des tests d'amplification. Notamment, les interférences reçues au niveau de l'antenne de réception peuvent induire des erreurs dans le calcul des variations de gains dynamiques pour le calcul du diagramme de l'antenne de réception du satellite.

Dans les liaisons descendantes, les émissions de systèmes de transmissions voisins peuvent interférer avec les émissions du système de transmission sous test et dégrader la précision des mesures réalisées au sol. Ainsi, au sol, le calcul de la puissance du signal émis depuis l'antenne d'émission du satellite peut être faussé par la prise en compte de la puissance des interférences reçues au sol.

Le document US 5697050 divulgue un procédé de correction du diagramme de rayonnement d'une antenne satellite.

## RESUME DE L'INVENTION

L'invention permet de résoudre les inconvénients précités, suivant le procédé défini par la revendication indépendante 1.

L'objet de l'invention concerne un procédé de mesure de gains d'antenne d'un satellite pour l'aide à la génération d'au moins un diagramme de rayonnement. Avantageusement, les niveaux de signaux d'une antenne en émission et une antenne en réception du satellite permettent d'obtenir les diagrammes des deux antennes simultanément par une méthode commune.

Avantageusement, le procédé selon l'invention comprend une étape de configuration et de paramétrage d'une communication, une étape d'établissement de la communication comprenant au moins une émission selon une voie montante entre une station au sol et un satellite et une réception selon une voie descendante entre le satellite et une station au sol d'un signal de test. Le procédé comprend en outre une étape de mesure permettant de déduire un diagramme d'antennes pour l'émission selon la voie montante et la réception selon la voie descendante qui dépend des orientations de chaque antenne.

La configuration comprend :

- une définition d'un signal utile Su de référence;
- une définition d'un premier canal d'émission pour l'établissement de communications :

   - d'une part entre un premier émetteur d'une première station terrestre ST1 et une première antenne ANT1 d'un premier récepteur R1 d'un premier satellite SAT et ;
   d'autre part entre une seconde antenne ANT2 d'un second émetteur E2 du premier satellite SAT et un second récepteur R2 d'une seconde station terrestre ST2;

   - une définition d'une première modulation Mod1 du premier signal utile par étalement de spectre occupant une bande de fréquences adaptées au premier canal ;
   - la configuration d'une première orientation $\theta_i$ de la première antenne ANT1 et d'une seconde orientation $\alpha_i$ de la seconde antenne ANT2.

L'établissement d'une transmission comprend :

- une liaison montante comprenant une émission du signal utile Su modulé selon la première modulation Mod1 par le premier émetteur E1 générant un signal utile modulé SMu vers le premier récepteur R1 ayant d'une chaine de réception recevant un premier signal SM1, le premier signal SM1 comprenant des interférences J1 et le signal utile modulé SMu, ladite chaine de réception étant couplée à un second émetteur E2 ;
- une amplification du premier signal total SM1 par une chaine d'amplification (ALC, TWT) de gain variable Gx permettant de maintenir un niveau d'une première puissance $P_0$ d'un second signal SM2 en sortie du second émetteur E2 à une valeur prédéfinie et constante, la puissance d'entrée du premier signal total SM1 ou le gain variable Gx étant connu à chaque instant ;
- une liaison descendante comprenant une émission par le second émetteur E2 du second signal SM2 vers un second récepteur R2 d'une seconde station terrestre ST2, le second récepteur comprenant une chaine de réception d'un troisième signal SM3 permettant une première démodulation correspondant à un dés-étalement de spectre permettant d'obtenir un troisième signal démodulé S3 ;

Les mesures comprennent :

- des mesures de puissances réalisées par un calculateur comprenant :

   - une première mesure de la puissance du signal ($P_{R2}$(SM3)) reçu par la seconde antenne (11) du second récepteur (R2) avant la démodulation par dés-étalement de spectre ;
   - une seconde mesure de la puissance du troisième signal utile démodulé ($P_{R2}$(S3)) après dés-étalement du spectre du troisième signal reçu (SM3) ;

Le procédé comprend un calcul de facteurs Rx($\theta_i$), Tx($\alpha i$) de pertes de puissance dont :

- un premier facteur Rx($\theta_i$) représentant les pertes de puissance liées à la première orientation $\theta_i$ sur la liaison montante, le premier facteur étant calculé à partir d'un premier rapport invariant K1 à partir des mesures de puissances ;

▪ un second facteur Tx($\alpha$i) représentant les pertes de puissance liées à la première orientation ($\alpha$i) sur la liaison descendante.

Le second facteur est calculé avant le premier facteur étant donné que seuls les niveaux de puissance à l'émission et à la réception sont nécessaires.

Un avantage de l'invention est de permettre une mesure de facteurs représentant les pertes de puissances liées aux orientations des antennes d'émission et de réception en une seule liaison bout-en-bout.

Un avantage du procédé de l'invention est d'obtenir des mesures précises de ces facteurs tout en minimisant :

- d'une part, les niveaux de puissances émises et reçues de manière à éviter des désagréments pour les systèmes voisins et ;
- d'autre part, l'influence des interférences pouvant provenir d'autres systèmes et faussant les mesures de tests.

Un avantage de cette solution est de mesurer simplement le niveau de puissance en un point de la terre et d'en déduire une cartographie du diagramme de l'antenne d'émission et de l'antenne de réception d'un satellite. Ce sont les antennes qui effectuent des mouvements (changement d'orientations de l'antenne par exemple), et qui sont testées pour chacune des orientations. Le test est simple à mettre en oeuvre dans la mesure où les antennes sont facilement pilotables depuis une station terrestre.

Avantageusement, l'émission par le premier émetteur E1 et la réception par le second récepteur R2 sont effectuées aux mêmes coordonnées géographiques au sein d'une même station terrestre.

Un avantage de cette solution est de permettre de tester la première antenne de réception d'un satellite de la liaison montante et l'antenne d'émission du même satellite de la liaison descendante en un même point de la terre. Un avantage de cette solution permet de mettre en oeuvre les tests plus simplement pour reboucler les données émises avec les données reçues à ce point.

Avantageusement, le second facteur Tx($\alpha_i$) est obtenu en calculant le rapport entre la puissance émise $P_0$ fixe par le second émetteur E2 de l'antenne d'émission ANT2 du satellite SAT et la puissance totale $P_{R2}(SM2)$ du signal émis SM2 par le satellite SAT et reçu au niveau du second récepteur (R2) de la seconde station terrestre ST2.

Avantageusement, le premier facteur Rx($\theta_i$) est calculé en fonction d'un premier rapport K1, ledit premier rapport étant le rapport entre la puissance du signal utile $P_{R1}(SMu)$ et de la puissance des interférences $P_{R1}(J1)$ reçus au niveau de la première antenne ANT1 du premier récepteur R1 du satellite SAT.

Avantageusement, le premier rapport K1 est invariant pendant une durée prédéterminée, et que le premier rapport K1 est égal au rapport entre la puissance du signal utile $P_{R2}(SMu)$ calculée au second récepteur R2 et la puissance des interférences ($P_{R2}(J1)$) reçus au niveau de la seconde antenne (11) du second récepteur (R2) de la seconde station terrestre (ST2).

Avantageusement, le premier facteur Rx($\theta$i) est calculé en fonction du premier rapport K1, de la première puissance $P_0$ et de la puissance du signal utile émis $P_{E1}(SMu)$ calculée au niveau du premier émetteur E1 de l'antenne d'émission 10 de la seconde station au sol ST2.

Avantageusement, le premier rapport K1 est calculé à partir des mesures suivantes :

- une première mesure de la puissance du signal $P_{R2}(SM3)$ reçu par la seconde antenne 11 du second récepteur R2 avant la démodulation par dés-étalement de spectre ;
- une seconde mesure de la puissance du troisième signal utile démodulé $P_{R2}(S3)$ après dés-étalement du spectre du troisième signal reçu SM3 ;
- une troisième mesure de la puissance des interférences $P_{R2}(J1)$ reçues par la seconde antenne 11 du second récepteur R2 après réception du troisième signal SM3 ;
- une quatrième mesure du premier facteur $K_1$ correspondant à la quantification du rapport entre la puissance du signal utile modulé $P_{R1}(SMu)$ et la puissance des interférences $P_{R1}(J1)$ reçues par le premier récepteur R1 du satellite.

Avantageusement, l'émission par le premier émetteur E1 et la réception par le second récepteur R2 sont effectuées aux mêmes coordonnées géographiques au sein d'une même station terrestre ST1, ST2.

Avantageusement, le signal utile de référence est un train de bits transmis à une vitesse entre 200bps et 10kbps.

Avantageusement, les premier et second canaux d'émission ont une largeur de bande comprises entre 20 et 120 MHz et que la fréquence centrale des premier et second canaux est comprise entre 1 GHz et 40GHz.

Avantageusement, la première modulation par étalement de spectre comprend un taux d'encodage compris entre 10 et 60 MHz.

Avantageusement, la modulation par étalement de spectre est réalisée par l'utilisation de séquence de pseudo-bruit.

L'objet de l'invention concerne en outre un procédé de génération d'un ensemble de mesures pour l'établissement de la cartographie d'un diagramme d'émission de la seconde antenne d'émission E2 du satellite dont la configuration comprend :

- une définition d'une zone de couverture Z d'une antenne définissant une surface terrestre ;
- la définition d'une séquence d'orientations $\{\alpha_i\}_{i\square[1\;;N]}$ de l'antenne ANT2 définissant un échantillonnage de points de la zone de couverture Z, chaque orientation $\alpha_i$ étant définie par une consigne de roulis et une consigne de lacet par rapport à une orientation de référence ;
- la mesure du second facteur $Tx(\alpha_i)$ est réitérée pour chaque orientation $\alpha_i$ de la séquence.

L'objet de l'invention concerne un procédé de génération d'un ensemble de mesures pour l'établissement de la cartographie d'un diagramme de réception de la première antenne de réception R1 du satellite dont :

- la configuration comprend :

  - une définition d'une zone de couverture Z de l'antenne de réception définissant une surface terrestre ;
  - la définition d'une séquence d'orientations $\{\theta_i\}_{i\square[1\;;N]}$ de l'antenne ANT1 du premier récepteur R1 du satellite définissant un échantillonnage de points de la zone de couverture Z, chaque orientation $\alpha_i$ étant définie par une consigne de roulis et une consigne de lacet par rapport à une orientation de référence ;

- la mesure du second facteur $Rx(\theta_i)$ est réitérée pour chaque orientation $\theta_i$ de la séquence.

## BREVES DESCRIPTION DES FIGURES

D'autres caractéristiques et avantages de l'invention ressortiront à la lecture de la description détaillée qui suit, en référence aux figures annexées, qui illustrent :

- figure 1 : une courbe représentant la puissance à proximité du point de saturation en sortie de la chaine d'amplification du satellite ;
- figure 2 : une représentation d'une cartographie terrestre et d'une zone de couverture d'une antenne testée par exemple à partir d'une méthode de l'invention ;
- figure 3 : un diagramme comportant les principales étapes du procédé.
- figure 4 : un système permettant la mise en oeuvre de la méthode de l'invention.

## DESCRIPTION

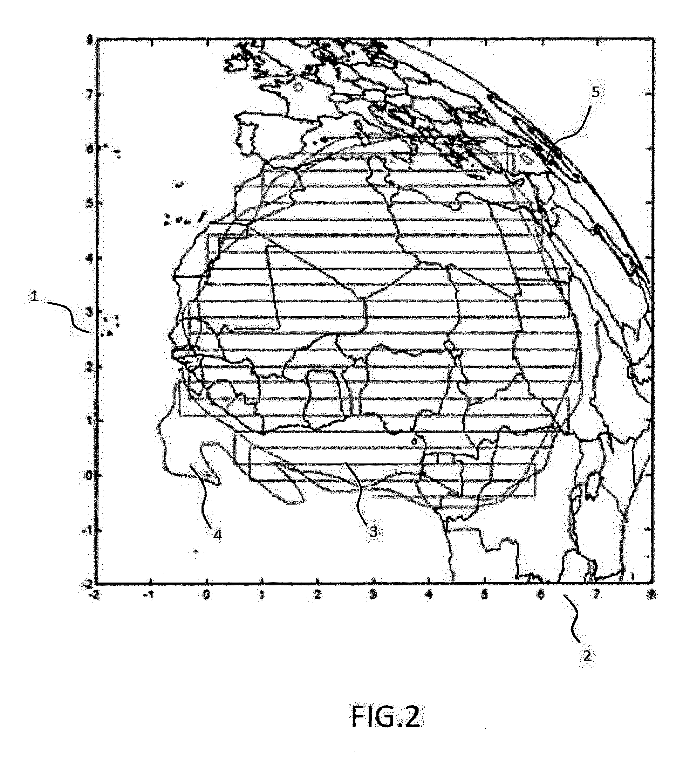

Un satellite est en orbite par exemple à une altitude géostationnaire de manière à éclairer la même surface apparente d'une portion de la planète 5. La figure 2 représente justement une zone de couverture 4 supposée couverte par le diagramme de rayonnement de l'antenne de réception et/ou d'émission du satellite lorsque l'une de ces dernières est orientée selon une direction donnée.

De manière à tester le diagramme de l'antenne de réception et/ou d'émission en chacun des points de la zone de couverture supposée, la méthode de l'invention permet de conduire des tests d'émission et réception en changeant régulièrement l'orientation des antennes et en effectuant des mesures en un point de la zone, au niveau d'une station terrestre. Pour cela un plan de tests comprend une séquence d'orientations des antennes de réception et d'émission du satellite pour lesquelles des tests seront effectués pour chacun des points de la séquence.

Ainsi il est possible de cartographier le diagramme de l'antenne d'émission et de réception en effectuant des mesures le long d'un plan prédéfini. Le plan 3 représente des lignes horizontales projetées sur la zone de couverture des antennes du satellite. Ces dernières dessinent un échantillonnage de la zone de couverture par un quadrillage comportant principalement des lignes horizontales.

Le procédé de l'invention permet la mesure en réception et en émission des niveaux de puissances d'un diagramme d'antenne supposé couvrir une zone donnée.

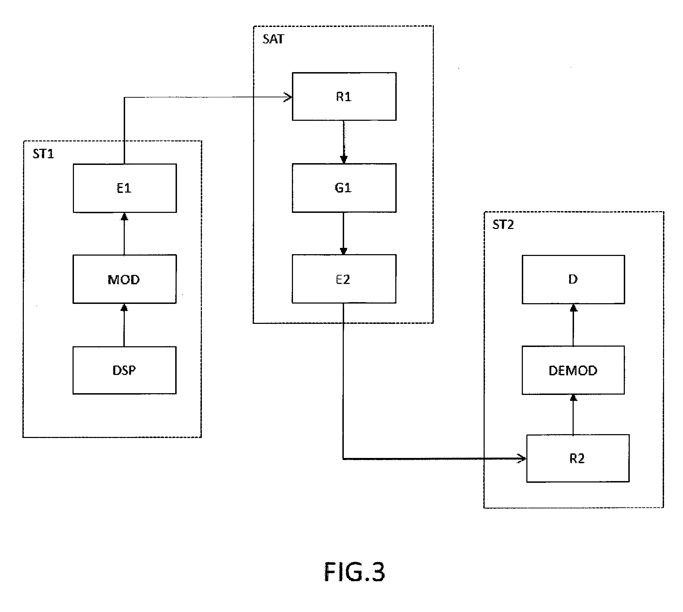

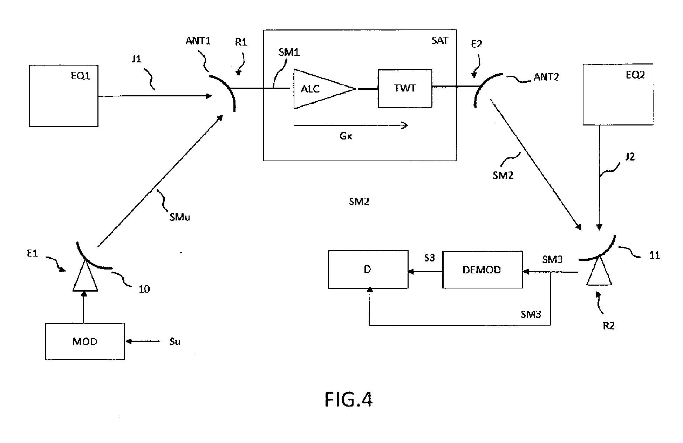

La figure 3 représente un diagramme permettant de représenter les principales étapes du procédé de test de l'invention dans une liaison bout-en-bout. La figure 3 illustre les étapes d'une mise en oeuvre de la figure 4 du procédé de l'invention.

La liaison bout en bout est ici représentée par une première entité représentant une première station terrestre ST1, une seconde entité représentant un satellite SAT et une troisième entité représentant une seconde station terrestre ST2.

Le mode de réalisation décrit ne se restreint pas à cette unique configuration. Le procédé de l'invention se rapporte donc à d'autres configurations possibles, par exemple :

- une configuration où les trois entités sont des stations terrestres ;
- une configuration où les première et seconde entités sont les mêmes, c'est-à-dire situées à la même position géographique.

Dans l'exemple de la figure 3, le procédé comporte une première étape de génération d'un signal utile Su de référence au moyen d'un générateur de signal, noté DSP sur la figure 3. Le signal utile Su est de préférence de forme simple et régulière. Il définit un train de bits comportant par exemple des paquets de bits émis selon une vitesse constante.

Le signal utile Su est ensuite modulé au moyen d'un modulateur MOD à étalement de spectre permettant de générer un signal utile modulé SMu, la puissance du signal émis est donc étalée sur une bande d'un canal prédéfini.

Le signal utile modulé est émis au moyen d'un émetteur E1 comportant une antenne 10. Le signal utile modulé SMu est émis en direction du satellite SAT. On note $P_{E1}(SMu)$ la puissance du signal SMu au niveau de l'antenne 10 de l'émetteur E1 de la station au sol ST1 sur une période donnée.

Le satellite SAT comporte un premier récepteur R1 permettant de recevoir le signal utile modulé SMu. Des premières interférences J1 indésirables peuvent se superposer au signal utile modulé SMu en réception. Les signaux reçus sont ensuite amplifiés par une chaine d'amplification comportant un amplificateur variable ALC et un tube à ondes progressives TWT. Le gain variable total de la chaine est noté Gx. L'amplification du signal permet de délivrer un signal à forte puissance à un second émetteur E2 du satellite.

On note SM1 la somme des signaux utiles SMu et des interférences J1 qui sont reçus pendant une durée donnée au niveau de l'antenne de réception ANT1 du premier récepteur R1 du satellite.

Les interférences J1 sont susceptibles d'être engendrées par des systèmes voisins, tels que des satellites proches.

On note $P_{R1}(SMu)$ la puissance du signal utile SMu reçue au niveau de l'antenne de réception R1 sur une période donnée. Le procédé de l'invention permet de déterminer cette puissance pour en déduire une mesure du diagramme de rayonnement de l'antenne de réception pour une orientation $\theta$ donnée de l'antenne de réception ANT1.

En effet, le facteur $Rx(\theta) = P_{E1}(SMu) / P_{R1}(SMu)$ représente les pertes de puissance liées à l'orientation $\theta$ de l'antenne de réception du satellite.

$P_{E1}(SMu)$ est connue par définition puisqu'il s'agit du signal qui est généré depuis la station au sol vers le satellite.

On note $P_{R1}(SM1)$ la puissance du signal SM1 qui est la puissance totale reçue à l'antenne ANT1 de réception du récepteur R1 du satellite SAT sur une période donnée. Le signal SM1 représente la somme des signaux reçue au niveau du récepteur R1 du satellite.

On peut écrire que : $P_{R1}(SM1) = P_{R1}(SMu) + P_{R1}(J1)$.

Où $P_{R1}(J1)$ est la puissance des interférences J1 provenant d'autres systèmes au niveau de l'antenne ANT1 du récepteur R1 du satellite.

Les signaux reçus à l'antenne de réception ANT1 du premier récepteur R1 du satellite sont amplifiés dynamiquement à partir d'un gain variable Gx de telle manière qu'une puissance fixe $P_0$ prédéfinie est maintenue constante en sortie de l'antenne d'émission ANT2 du second émetteur E2 du satellite.

On note SM2 le signal amplifié comprenant le signal utile amplifié et les interférences amplifiées. Le signal SM2 est émis pour une direction de l'antenne d'émission $\alpha$ prédéfinie du satellite à une puissance $P_0$. On peut écrire que $P_{E2}(SM2) = P_0 = Gx \cdot P_{R1}(SM1)$ ;

Où $P_{E2}(SM2)$ est la puissance du signal SM2 au niveau de l'antenne d'émission ANT2 de l'émetteur E2.

Les calculs des puissances peuvent être effectués en négligeant les bruits des chaines de réception, d'amplification et d'émission du satellite.

La seconde station terrestre ST2 enregistre en réception à partir d'un second récepteur R2 un signal reçu SM3 sur le même canal que le signal émis SM2. SM3 est la somme des signaux utiles SM2 et d'interférences éventuelles J2 reçues à l'antenne de réception 11 au sol.

Les canaux de la voie montante et de la voie descendante sont préférentiellement identiques.

Des secondes interférences J2 sont susceptibles d'être reçues au niveau du second récepteur R2. Les niveaux de puissances en réception peuvent être enregistrés.

On a $P_{R2}(SM3) = P_{R2}(SM2) + P_{R2}(J2)$

On note $P_{R2}(J2)$ la puissance des interférences reçues provenant de systèmes tiers au niveau de l'antenne 11 du second récepteur R2 de la station terrestre ST2.

On note $P_{R2}(SM2)$ la puissance du signal SM2 reçu au niveau de l'antenne de réception R2 sur une période donnée. Cette puissance permet de déduire une mesure du diagramme de rayonnement de l'antenne d'émission pour une orientation $\alpha$ de l'antenne d'émission.

En effet, le facteur $Tx(\alpha) = P_{E2}(SM2) / P_{R2}(SM2) = P_0 / P_{R2}(SM2)$ représente les pertes de puissance liée à l'orientation $\alpha$ de l'antenne d'émission du satellite dans la voie descendante.

Dans une première variante du procédé de l'invention, les calculs sont réalisés en négligeant les interférences J2. On considère que SM2 = SM3.

A la réception du signal total SM2, les niveaux de puissances reçues ayant été calculés, le signal SM2 est démodulé par dés-étalement de spectre au moyen d'un démodulateur DEMOD. Le niveau de puissance du signal utile S2 peut alors être déduit après dés-étalement du spectre par la démodulation.

La puissance du signal des interférences J1 peut être déduite par comparaison de la puissance du signal utile mesurée avant et après la démodulation par dés-étalement de spectre.

Le procédé de l'invention permet donc de déduire $P_{R2}(J1)$ par la mesure de $P_{R2}(SM2)$, c'est-à-dire la puissance du signal SM2 au niveau de l'antenne du récepteur R2 et $P_{R2}(S2)$, c'est à dire la puissance du signal S2 au niveau de l'antenne du récepteur R2 après dés-étalement du spectre.

$$P_{R2}(J1) = P_{R2}(SM2) - P_{R2}(S2)$$

Le procédé de l'invention permet de définir un facteur noté K1, répondant à la relation suivante :

$$K1 = P_{R1}(SMu) / P_{R1}(J1)$$

Le rapport K1 est invariant tout au long de la liaison bout en bout. Le rapport du signal utile SMu sur le niveau d'interférence J1 au récepteur R1 ne change pas quel que soit le traitement du signal en aval du récepteur R1.

Donc on a :

$$K1 = P_{R2}(SMu) / P_{R2}(J1)$$

Le calcul du rapport K1 est réalisé au sol au niveau de la station terrestre ST2 au moyen d'un calculateur. Le rapport K1 étant calculé après la réception du signal lors de sa retransmission par la liaison descendante du satellite vers la station terrestre ST2, il est ensuite utilisé dans le calcul des niveaux de puissances de la liaison montante de la station ST1 vers le satellite SAT. Le rapport K1 peut être utilisé dans le calcul des niveaux de puissances de la liaison montante du fait de son invariance tout au long de la liaison.

Puisque la puissance $P_{R2}(SM2)$ peut être calculée à l'antenne de réception 11 du récepteur R2, la puissance $P_{R2}(SMu)$ peut être déduite facilement car :

$$P_{R2}(SMu) = P_{R2}(SM2) - P_{R2}(J1).$$

On peut donc en déduire le rapport K1 connaissant d'une part $P_{R2}(SMu)$ et d'autre part $P_{R2}(J1)$.

Un avantage est que le rapport K1 peut être utilisé également du fait de son invariance au niveau du récepteur R1 du satellite pour le calcul de la puissance du signal utile reçue.

Le procédé de l'invention permet donc d'utiliser avantageusement l'invariance du rapport K1, notamment pour le calcul de $Rx(\theta)$.

Si l'on considère dans un premier temps la liaison descendante du satellite vers la station au sol, le satellite émet à une puissance fixe prédéfinie et égale à $P_0$.

On a:

$$P_{R2}(SM2) = Tx(\alpha) \cdot P_0$$

En conséquence, $Tx(\alpha)$ peut-être directement mesurée par la mesure de la puissance du signal total reçue $P_{R2}(SM2)$ au niveau de l'antenne R2 et par la connaissance de $P_0$ qui est connue par construction.

On a donc : $Tx(\alpha) = P_{R2}(SM2) / P_0$

Le procédé de l'invention permet d'évaluer simplement le facteur $Tx(\alpha)$ en fonction de l'angle $\alpha$ de l'antenne.

Cette mesure permet de déduire la loi $Tx(\alpha)$ en fonction des orientations $\alpha$ de l'antenne d'émission du satellite.

La puissance $P_{R2}(SM2)$ est mesurée par un équipement permettant la mesure de puissance d'un signal reçu à une antenne donnée. $P_{R2}(SM2)$ comprend la puissance du signal utile et de potentielles interférences.

Le rapport $Tx(\alpha)$ peut donc être ensuite exprimé éventuellement en fonction de la puissance du signal utile

$P_{R2}(SMu)$ et de K1 qui est un rapport invariant dans un espace de temps prédéfini tout au long de la liaison bout en bout du signal SMu.

$$Tx(\alpha) = (P_{R2}(SMu) + P_{R2}(J1)) / P_0$$

$$Tx(\alpha) = (P_{R2}(SMu) + P_{R2}(SMu)/K1) / P_0$$

$$Tx(\alpha) = (1 + K1) / K1 \cdot P_{R2}(SMu) / P_0$$

Donc on peut exprimer K1 en fonction de $P_{R2}(SMu)$

$$K1 = P_{R2}(SMu) / [Tx(\alpha) \cdot P_0 - P_{R2}(SMu)]$$

K1 peut donc être calculé au niveau de la station ST2 à la réception du signal SM2.
Et inversement, on a également :

$$P_{R2}(SMu) = [ K1 / (1 + K1) ] \cdot Tx(\alpha) \cdot P_0$$

K1 est un facteur pouvant être calculé au sol et qui est invariant tout au long de la liaison dans une période de temps relativement courte et qui est prédéfinie. En outre, $P_0$ est la puissance de sortie fixe et connue en sortie de l'émetteur E2 du satellite.
Si l'on considère dans un second temps la liaison montante de la station au sol ST1 vers le satellite SAT, la station au sol ST1 émet à une puissance $P_{E1}(SMu)$ au niveau de l'émetteur E1.
On a :

$$P_{R1}(SMu) = Rx(\theta) \cdot P_{E1}(SMu)$$

$$Rx(\theta) = P_{R1}(SMu) / P_{E1}(SMu)$$

Or :

$$P_0 = Gx \cdot P_{R1}(SM1) = Gx \cdot (P_{R1}(SMu) + P_{R1}(J1))$$

Avec :

$$K1 = P_{R1}(SMu) / P_{R1}(J1)$$

On trouve donc :

$$P_0 = Gx \cdot (P_{R1}(SMu) + P_{R1}(SMu)/K1)$$

$$P_0 = Gx \cdot P_{R1}(SMu) \cdot (1 + 1 / K1)$$

Et donc :

$$P_{R1}(SMu) = P_0/Gx \cdot 1/ (1 + 1 / K1)$$

Le gain variable de l'amplificateur ALC est connu depuis le sol ainsi que le gain total Gx de la chaine d'amplification. En effet, Gx est le gain total de la chaine et est donc la somme du gain variable de l'amplificateur ALC et du gain fixe d'un tube TWT. De ce fait, le gain total de la chaine est lui aussi variable du fait que le gain de l'amplificateur ALC est variable.

Le gain de la chaine d'amplification correspond au rapport en la puissance du signal de sortie fixe P0 sur la puissance du signal d'entrée $P_{R1}(SM1)$ dans la chaine au niveau de l'antenne R1. La puissance d'entrée $P_{R1}(SM1)$ ou le gain Gx peut est calculée ou obtenue par la télémétrie.

$$Rx(\theta) = (P_0/Gx \cdot 1/ (1 + 1 / K1)) / P_{E1}(SMu)$$

$$Rx(\theta) = K1 / (1+K1) \cdot P_0 / (Gx \cdot P_{E1}(SMu))$$

Où K1 est un facteur pouvant être calculé au sol et qui est invariant tout au long de la liaison. En outre, $P_0$ est la puissance de sortie fixe et connue en sortie de l'émetteur E2 du satellite. Enfin, $P_{E1}(SMu)$ la puissance du signal utile émise depuis la station au sol ST1 dont la valeur est donc connue.

On en déduit la loi $Rx(\theta)$ en fonction des orientations $\theta$ de l'antenne de réception du satellite.

Ainsi pour une séquence de tests $\{\theta i, \alpha i\}_{i \square [1, N]}$, le procédé de l'invention permet de déduire le diagramme de rayonnement de l'antenne de réception du récepteur R1 du satellite par l'ensemble des valeurs $\{Rx(\theta i)\}_{i \square [1, N]}$, et le diagramme de rayonnement de l'antenne d'émission de l'émetteur E2 du satellite par l'ensemble des valeurs $\{Tx(\alpha i)\}_{i \square [1,N]}$.

Au sol, la station est munie d'équipements permettant de mesurer les niveaux de puissances tels que des analyseurs de spectre et comporte également au moins un calculateur D de manière a effectué les calculs sur les signaux reçus, notamment il permet d'identifier et quantifier les niveaux des interférences J1 selon le procédé de l'invention.

Les premières interférences J1 pouvant être calculées ainsi que le rapport K1 invariant sur une période de temps limité, le procédé de l'invention permet alors de calculer la puissance utile du signal reçu à la première antenne ANT1 de réception du satellite R1 : $P_{R1}(SMu)$.

La méthode de l'invention permet donc de déterminer les niveaux de puissances liées aux interférences J1 afin d'en déduire les puissances de signal utile au niveau des antennes ANT1 de réception du récepteur R1 et ANT2 d'émission de l'émetteur E2 du satellite.

Lorsque les interférences J2 sont non négligeables et perturbent les mesures de puissance à la réception du second récepteur de la station ST2 au sol, il est possible également de déterminer les lois $Rx(\theta i)$ et $Tx(\alpha i)$.

Dans une seconde variante, les calculs sont réalisés en prenant en compte les interférences J2. On considère que SM3 = SM2 + J2.

Dans ce cas de figure, le procédé de l'invention permet, en considérant l'hypothèse que les interférences J2 sont constantes sur une période $T_0$ de temps prédéfini, de calculer les lois $Rx(\theta i)$ et $Tx(\alpha i)$.

On considère que la période $T_0$ est supérieure à la durée d'intégration du signal au niveau du récepteur R2 et au temps de calcul. Cependant, on considère que la période $T_0$ mais suffisamment courte pour considérer le niveau des interférences comme constante.

Avec cette hypothèse, le procédé de l'invention permet de mesurer seules les interférences J2 par exemple en coupant l'émission du signal utile SMu pendant un laps de temps afin de ne recevoir que les interférences J2.

Une fois la valeur de la puissance sur un laps de temps prédéfinie ou la puissance moyenne des interférences J2 calculée, une estimation de la puissance totale reçue peut être effectuée.

Cette étape permet alors de soustraire simplement la puissance des interférences J2 à la puissance totale reçue au niveau du récepteur R2 de l'antenne 11 du satellite.

Le calcul ensuite reste identique à la méthode décrite précédemment.

- $P_{R2}(SM3) = P_{R2}(SM2) + P_{R2}(J2)$ lorsque le signal utile SMu est émis

- $P_{R2}(SM3) = P_{R2}(J2)$ lorsque le signal utile SMu n'est pas émis.

On en déduit donc le niveau de puissance des interférences J2 : $P_{R2}(J2)$.

Comme énoncé précédemment un avantage de l'utilisation de l'étalement de spectre est qu'à la réception du signal au niveau du second récepteur R2, le dés-étalement de spectre permet d'éliminer les interférences J2 dans le calcul de la puissance utile après dés-étalement du spectre.

Une contrainte de l'utilisation de l'étalement de spectre est que les tests effectués sur les signaux doivent être effectués de bout-en-bout. Ceci confère cependant un avantage : de réaliser deux tests en une manipulation pour chacune des antennes. Néanmoins, le cumul des interférences à l'entrée de chaque récepteur, dont R1 et R2, qui se superposent au signal utile peut être facilement éliminés par la modulation et la démodulation du signal utile par étalement et dés-étalement de spectre.

La figure 4 décrit une mise en oeuvre possible du procédé de l'invention.

Un système comportant une première station terrestre ST1 comprend une première antenne d'émission 10 permettant de transmettre un signal utile Su modulé par une modulation à étalement de spectre générant un signal modulé SMu.

Le signal utile Su est défini de manière à faciliter la mise en oeuvre du test.

Le signal utile peut être un train de bits défini par des trames des 1000 bits transmis sur une seconde. Le train a une vitesse de 1 kbps.

Une modulation d'étalement de spectre est définie. Pour cela toutes les méthodes d'étalement de spectre peuvent être choisies. La méthode de l'invention permet de définir les caractéristiques de la modulation par étalement de spectre selon le type d'émetteurs, des bandes de fréquences utilisées, des niveaux requis de puissance émise.

Dans un exemple de réalisation, la méthode de modulation d'étalement de spectre par la génération de séquences de pseudo-bruit est adaptée à la solution de l'invention. Le taux de modulation choisi doit être élevé vis-à-vis du train de données à transmettre. A titre d'exemple, pour moduler un signal à 1 kbps, un taux de modulation adapté est de 1 Mchip/s.

On appelle le « taux de modulation » également le « chip rate » lorsque la vitesse à laquelle les bits de signal d'information sont transmis comme une séquence pseudo-aléatoire correspondant à une modulation par une séquence de pseudo-bruit. Il s'agit du taux d'encodage d'information utile par la séquence de pseudo-bruit.

Lorsqu'un tel signal utile est modulé par une séquence de pseudo-bruit, le récepteur doit également comprendre la séquence de manière à démoduler le signal.

Un avantage des méthodes de modulation par étalement de spectre est qu'elles limitent les interférences dégradant les qualités d'émission/ réception généralement obtenues par des modulations de signaux classiques.

Cet avantage résulte notamment des bonnes propriétés des séquences de pseudo-bruit vis à vis des fonctions d'étalement de spectre qui permettent, lorsque le signal est démodulé, de réduire les interférences à des niveaux très faibles. Les interférences qui se superposent au signal transmis, par exemple dans une liaison descendante du satellite vers la station terrestre ST2, ont une densité spectrale étalée sur toute la bande lorsqu'elles sont démodulées par une séquence de pseudo bruit.

La méthode de l'invention permet d'établir un test de bout en bout, c'est-à-dire de la station terrestre ST1 à la station terrestre ST2, en envoyant un premier signal utile modulé SMu par une modulation à étalement de spectre de la première station terrestre ST1. Le premier signal utile modulé SMu est reçu au niveau d'un premier récepteur R1 de l'antenne ANT1, par exemple d'un satellite SAT. Il est ensuite amplifié avec un gain Gx variable comme précisé précédemment pour délivrer une puissance fixe P0 en sortie de la chaine d'amplification du satellite. L'amplificateur à gain variable est noté ALC, il est couplé à un tube dont l'amplification est fixe et prédéfinie notée TWT. Le satellite comprend un émetteur, noté E2 sur la figure 4, qui émet un signal amplifié à puissance fixe. La station terrestre ST2 reçoit le signal SM2 à plus ou moins forte puissance selon l'orientation de l'antenne d'émission du satellite. Le second récepteur R2 comporte une antenne 11.

Dans une variante de réalisation de l'invention, les antennes d'émission et de réception du satellite ANT1 et ANT2 peuvent être identiques.

Dans une variante de réalisation qui peut se combiner avec tous les autres modes de réalisation, les première et seconde stations terrestres peuvent être la même station terrestre comme précisé précédemment.

Un avantage de l'utilisation d'une modulation par étalement de spectre est double. Dans un premier aspect, le premier émetteur terrestre ST1 permet de ne pas émettre des puissances trop élevées pour les systèmes voisins du fait de la puissance étalée sur la largeur de bande utilisée du canal. Une fois le signal émis, il parvient au satellite avec une puissance réduit, et donc ne perturbe pas les systèmes voisins du satellite.

Selon un second aspect, la puissance émise par le satellite dans une liaison bout-en-bout est également étalée du fait de la modulation par étalement de spectre qui est conservée tout au long de la transmission. Les systèmes voisins restent préservés de toute nuisance provenant du satellite testé par la méthode de l'invention.

Entre chaque mesure au sol, les mesures de puissances reçues au sol permettent de définir un échantillonnage de valeurs relevées pour le quadrillage d'une zone de couverture telle que définie à la figure 2.

Après chaque test d'un couple d'orientations $\{\theta i, \alpha i\}_{i \square [1, N]}$, d'antennes respectivement de réception et d'émission du satellite, le signal utile est brièvement coupé de manière à modifier les orientations des antennes entre deux mesures pour parcourir un échantillonnage d'une zone de couverture.

Les changements d'orientations peuvent être définis par un plan de tests définissant des consignes de roulis et de lacet de l'antenne de réception et d'émission pour chaque mesure effectuée.

Un exemple de réalisation comprend la définition de canaux de transmissions sur les voies montantes et descendantes.

Concernant la voie montante, la fréquence centrale autour de laquelle la bande est centrée peut être par exemple choisie sensiblement égale à 13,5 GHz avec un canal ayant une bande de 54MHz.

Concernant la voie descendante, une autre fréquence centrale peut être choisie sensiblement égale à 11 GHz. Dans la liaison descendante, le même canal noté peut être utilisé autour de la dite fréquence. Les valeurs numériques sont données à titre d'un exemple de réalisation.

Une modulation par étalement de spectre est définie à partir d'une séquence de pseudo-bruit et un débit bits de 1 kbps, le taux de modulation choisi est de 25 Mchip/s de manière à occuper le canal défini précédemment de 54MHz.

Le gain lié à l'encodage de la modulation est de :

$$10 \cdot \mathrm{Log}(\mathrm{Chip\ rate} / \mathrm{Bit\ rate}) = 44\mathrm{dB}.$$

La puissance du signal modulé émis est calibrée de manière à ce que l'antenne en réception du satellite traite un signal dont la puissance reçue est nominale. Cette calibration est effectuée sans tenir compte de potentielles interférences. Cela permet de configurer l'amplificateur dans une zone de fonctionnement nominal de manière à utiliser pleinement l'amplitude de gain possible et la meilleure dynamique possible. Le niveau de Gain de l'amplificateur variable ALC est donc lui aussi calibré pour un niveau de signal utile attendu. Il est préférentiellement réglé à un niveau minimal de manière à avoir une grande capacité d'augmentation du gain du signal reçu lorsque ce dernier est de niveau faible. Ce cas est notamment utile pour les niveaux de signal correspondant aux limites de la zone de couverture.

La calibration est réalisée en prenant en compte différents facteurs dont notamment la position du satellite en orbite, la distance entre la première station terrestre et le satellite et l'orientation de l'antenne du satellite par exemple pour un point caractéristique du plan de tests prédéfinis qui permet d'échantillonner des valeurs pour la zone de couverture qui est testée.

La seconde antenne d'émission du satellite est calibrée pour permettre un niveau de sortie proche de 40dBW dans un exemple de réalisation.

Le gain d'encodage de 44dB permet une fois la démodulation effectuée de réduire les interférences d'un niveau équivalent soit de 44dB en termes de densité spectrale. On peut obtenir en utilisant les valeurs numériques de l'exemple une précision d'estimation du niveau du signal reçu de 0,1 dB.

Concernant les interférences J1, intervenant lors de la liaison montante au niveau de la première antenne de réception ANT1 du satellite, elles sont également amplifiées dans la chaine d'amplification du satellite comme décrits précédemment. On considère alors le signal SM1 comme la somme du signal utile modulé reçu SMu et des interférences J1. On néglige à nouveau, les niveaux de bruits internes aux chaines de réception et d'amplification comme précédemment.

La chaine d'amplification amplifie le signal SM1 de manière à réémettre ce signal à partir de la seconde antenne d'émission E2 du satellite SAT. Le gain variable total de la chaine d'amplification Gx appliqué au signal SM1 comprend l'amplification des interférences J1 puisque tous les signaux du canal de réception du récepteur R1 sont amplifiés.

Lorsque la station au sol démodule le signal SM3 à partir d'un composant DEMOD de la figure 2, on récupère un signal démodulé S3.

La démodulation s'effectue avec les valeurs numériques indiquées ci-dessus à 44dB de gain d'encodage. Les interférences J1 sont alors de la même manière rendues à de faibles niveaux par l'étalement de la puissance de la densité spectrale de ces dernières.

La puissance du signal SM3 peut être calculée avant la démodulation par dés-étalement au niveau de la seconde antenne 11 de réception de la seconde station terrestre ST2. La puissance du signal reçu peut être mesurée en effectuant une moyenne temporelle et par un analyseur de la puissance de spectre ou encore par la transformée discrète de Fourier et par application du théorème de Parseval pour les niveaux numériques.

De cette manière, les mesures de la puissance reçue du signal utile SMu au niveau de l'antenne de réception R1 du satellite permet de générer diagramme d'antenne de réception $\{Rx(\theta i)\}_{i \square [1, N]}$ du premier récepteur R1 du satellite, le test étant réalisé pour chacune des orientations du plan de tests prévus. D'autre part, l'analyse de la puissance du signal reçu au niveau du second récepteur R2 au sol, permet de déduire le diagramme $\{Tx(\alpha i)\}_{i \square [1, N]}$ de l'antenne d'émission E2 du satellite.

Avantageusement, les diagrammes des antennes sont calculés en effectuant l'hypothèse de l'invariance du rapport K1 tout au long de la liaison. Un avantage de cette méthode est un gain de précision dans les mesures tout en diminuant les effets indésirables de nuisances des autres systèmes et des effets indésirables causés aux autres systèmes.

Un autre avantage de cette méthode est que les calculs des valeurs du rapport K1 sont simples et peuvent être pris en compte dynamiquement ou à posteriori pour des calculs effectués après l'acquisition de toutes les mesures.

Au niveau de la seconde station terrestre ST2, la méthode de l'invention permet de calculer les niveaux de puissance en entrée du récepteur et après la démodulation des signaux.

**Revendications**

1. Procédé de mesure de gains d'antennes (R1, E2) d'un satellite pour l'aide à la génération d'au moins un diagramme de rayonnement, comprenant :

   - une configuration comprenant :

     - une définition d'un signal utile (Su) de référence;
     - une définition d'un premier canal d'émission pour l'établissement de communications :

       • d'une part entre un premier émetteur (E1) d'une première station terrestre (ST1) et un premier récepteur (R1) d'un premier satellite (SAT) et ;
       • d'autre part entre un second émetteur (E2) du premier satellite (SAT) et un second récepteur (R2) d'une seconde station terrestre (ST2);

     - une définition d'une première modulation (Mod1) du signal utile par étalement de spectre occupant une bande de fréquences adaptées au premier canal ;
     - la configuration d'une première orientation ($\theta_i$) de la première antenne (ANT1),

   - un établissement d'une transmission comprenant :

     - une liaison montante comprenant une émission du signal utile (Su) modulé selon la première modulation (Mod1) par le premier émetteur (E1) générant un signal utile modulé (SMu) vers le premier récepteur (R1) ayant une chaine de réception recevant un premier signal (SM1), le premier signal (SM1) comprenant des interférences (J1) et le signal utile modulé (SMu), ladite chaine de réception étant couplée au second émetteur du premier satellite (E2) ;
     - une amplification du premier signal total (SM1) par une chaine d'amplification (ALC, TWT) de gain variable (Gx) permettant de maintenir un niveau d'une première puissance ($P_0$) d'un second signal (SM2) en sortie du second émetteur (E2) à une valeur prédéfinie et constante, la puissance d'entrée du premier signal total (SM1) ou le gain variable (Gx) étant connu à chaque instant,
     - une liaison descendante comprenant une émission par le second émetteur (E2) du second signal (SM2) vers le second récepteur (R2) de la seconde station terrestre (ST2), le second récepteur comprenant une chaine de réception d'un troisième signal (SM3) permettant une première démodulation (Demod1) correspondant à un dés-étalement de spectre permettant d'obtenir un troisième signal démodulé (S3) ;

   - des mesures de puissances réalisées par un calculateur comprenant :

     - une première mesure de la puissance du signal ($P_{R2}$(SM3)) reçu par le second récepteur (R2) de la seconde station terrestre avant la démodulation par dés-étalement de spectre ;
     - une seconde mesure de la puissance du troisième signal utile démodulé ($P_{R2}$(S3)) après dés-étalement du spectre du troisième signal reçu (SM3) ;

   - un calcul de facteurs (Rx($\theta_i$), (Tx($\alpha_i$)) de pertes de puissance dont :

     - un premier facteur (Rx($\theta_i$)) représentant les pertes de puissance liées à la première orientation ($\theta_i$) sur la liaison montante, le premier facteur étant calculé à partir d'un premier rapport invariant (K1) à partir des mesures de puissances ;

- un second facteur (Tx($\alpha i$)) représentant les pertes de puissance liées à la seconde orientation ($\alpha i$) sur la liaison descendante.

2. Procédé selon la revendication 1, **caractérisé en ce que** le second facteur (Tx($\alpha_i$)) est obtenu en calculant le rapport entre la puissance émise ($P_0$) par une seconde antenne d'émission (ANT2) du second émetteur (E2) du satellite (SAT) et la puissance totale ($P_{R2}$(SM2)) du signal émis (SM2) par le satellite (SAT) et reçu au niveau du second récepteur (R2) de la seconde station terrestre (ST2).

3. Procédé selon la revendication 2, **caractérisé en ce que** le premier facteur (Rx($\theta_i$)) est calculé en fonction du premier rapport (K1), ledit premier rapport (K1) étant le rapport entre la puissance du signal utile ($P_{R1}$(SMu)) et de la puissance des interférences ($P_{R1}$(J1)) reçus au niveau de la première antenne (ANT1) du premier récepteur (R1) du satellite (SAT).

4. Procédé selon la revendication 2, **caractérisé en ce que** le premier rapport (K1) est invariant pendant une durée prédéterminée, et que le premier rapport (K1) est égal au rapport entre la puissance du signal utile ($P_{R2}$(SMu)) calculée au second récepteur (R2) et la puissance des interférences ($P_{R2}$(J1)) reçus au niveau de l'antenne (11) du second récepteur de la seconde station terrestre (ST2).

5. Procédé selon l'une quelconque des revendications 2 à 4, **caractérisé en ce que** le premier facteur (Rx($\theta i$)) est calculé en fonction du premier rapport (K1), de la première puissance ($P_0$) et de la puissance du signal utile émis ($P_{E1}$(SMu)) calculée au niveau du premier émetteur (E1) de l'antenne d'émission (10) de la seconde station au sol (ST2).

6. Procédé selon l'une quelconque des revendications 2 à 5, **caractérisé en ce que** le premier rapport (K1) est réalisé à partir des mesures suivantes :

   - une première mesure de la puissance du signal ($P_{R2}$(SM3)) reçu par l'antenne (11) du second récepteur (R2) avant la démodulation par dés-étalement de spectre ;
   - une seconde mesure de la puissance du troisième signal utile démodulé ($P_{R2}$(S3)) après dés-étalement du spectre du troisième signal reçu (SM3) ;
   - une troisième mesure de la puissance des interférences ($P_{R2}$(J1)) reçues par l'antenne (11) du second récepteur (R2) après réception du troisième signal (SM3) ;
   - une quatrième mesure du premier facteur ($K_1$) correspondant à la quantification du rapport entre la puissance du signal utile modulé ($P_{R1}$(SMu)) et la puissance des interférences ($P_{R1}$(J1)) reçues par le premier récepteur (R1) du satellite.

7. Procédé selon l'une quelconque des revendications 1 à 6, **caractérisé en ce que** l'émission par le premier émetteur (E1) et la réception par le second récepteur (R2) sont effectuées aux mêmes coordonnées géographiques au sein d'une même station terrestre (ST1, ST2).

8. Procédé selon l'une quelconque des revendications 1 à 7, **caractérisé en ce que** le signal utile de référence est un train de bits transmis à une vitesse entre 200bps et 10kbps.

9. Procédé selon l'une quelconque des revendications 1 à 8, **caractérisé en ce que** le premier et second canaux d'émission ont une largeur de bande comprises entre 20 et 120 MHz et que la fréquence centrale des premier et second canaux est comprise entre 1 GHz et 40GHz.

10. Procédé selon l'une quelconque des revendications 1 à 9, **caractérisé en ce que** la première modulation par étalement de spectre comprend un taux d'encodage compris entre 10 et 60 MHz.

11. Procédé selon l'une quelconque des revendications 1 à 10, caractérisé en ce la modulation par étalement de spectre est réalisée par l'utilisation de séquence de pseudo-bruit.

12. Procédé de génération d'un ensemble de mesures pour l'établissement de la cartographie d'un diagramme d'émission de la seconde antenne d'émission (ANT2) du satellite selon l'une quelconque des revendications 1 à 11, **caractérisé en ce** que :

   - l'étape de configuration comprend :

■ une définition d'une zone de couverture (Z) d'une antenne définissant une surface terrestre ;

■ la définition d'une séquence d'orientations ($\{\alpha_i\}_{i\square[1\,;N]}$) de la seconde antenne du second émetteur du satellite (ANT2) définissant un échantillonnage de points de la zone de couverture (Z), chaque orientation ($\alpha_i$) étant définie par une consigne de roulis et une consigne de lacet par rapport à une orientation de référence ;

■ l'étape de mesure du second facteur (Tx($\alpha_i$)) selon l'une quelconque des revendications 1 à 11 est réitérée pour chaque orientation de la séquence.

13. Procédé de génération d'un ensemble de mesures pour l'établissement de la cartographie d'un diagramme de réception de la première antenne de réception (R1) du satellite selon l'une quelconque des revendications 1 à 12, **caractérisé en ce** que :

■ l'étape de configuration comprend :

■ une définition d'une zone de couverture (Z) d'une antenne définissant une surface terrestre ;
■ la définition d'une séquence d'orientations ($\{\theta_i\}_{i\square O[1\,;N]}$) de la première antenne (ANT1) du premier récepteur (R1) du satellite définissant un échantillonnage de points de la zone de couverture (Z), chaque orientation ($\theta_i$) étant définie par une consigne de roulis et une consigne de lacet par rapport à une orientation de référence ;

■ l'étape de mesure du premier facteur (Rx($\theta_i$)) selon l'une quelconque des revendications 1 à 11 est réitérée pour chaque orientation de la séquence.

**Patentansprüche**

1. Messverfahren für Antennengewinne (R1, E2) eines Satelliten als Hilfe zum Generieren von wenigstens einem Strahlungsdiagramm, umfassend:

■ eine Konfiguration, umfassend:

■ eine Definition eines Referenz-Nutzsignals (Su);
■ eine Definition eines ersten Sendekanals für die Herstellung von Kommunikationen:

• einerseits zwischen einem ersten Sender (E1) einer ersten terrestrischen Station (ST1) und einem ersten Empfänger (R1) eines ersten Satelliten (SAT) und;
• andererseits zwischen einem zweiten Sender (E2) des ersten Satellits (SAT) und einem zweiten Empfänger (R2) einer zweiten terrestrischen Station (ST2);

■ eine Definition einer ersten Modulation (Mod1) des Nutzsignals per Spektrumsverteilung, die ein Band von an den ersten Kanal angepassten Frequenzen belegt;
■ die Konfiguration einer ersten Ausrichtung ($\theta_i$) der ersten Antenne (ANT1),

■ eine Herstellung einer Übertragung, umfassend:

■ eine Aufwärtsverbindung, umfassend eine Ausgabe des modulierten Nutzsignals (Su) gemäß der ersten Modulation (Mod1) durch den ersten Sender (E1), der ein moduliertes Nutzsignal (SMu) zum ersten Empfänger (R1) generiert, der eine ein erste Signal (SM1) empfangende Empfangskette hat, wobei das erstes Signal (SM1) Schnittstellen (J1) und das modulierte Nutzsignal (SMu) umfasst, wobei die genannte Empfangskette mit dem zweiten Sender (E2) des ersten Satellits gekoppelt ist;
■ eine Verstärkung des ersten totalen Signals (SM1) durch eine Verstärkungskette (ALC, TWT) des variablen Gewinns (Gx), die die Aufrechterhaltung eines Niveaus einer ersten Leistung (P0) eines zweiten Signals (SM2) am Ausgang des zweiten Senders (E2) auf einem vorbestimmten und konstanten Wert erlaubt, wobei die Eingangsleistung des ersten totalen Signals (SM1) oder der variable Gewinn (Gx) jeden Augenblick bekannt sind,
■ eine Abwärtsverbindung, umfassend eine Ausgabe des zweiten Signals (SM2) durch den zweiten Sender (E2) zum zweiten Empfänger (R2) der zweiten terrestrischen Station (ST2), wobei der zweite Empfänger eine Empfangskette eines dritten Signals (SM3) umfasst, die eine erste Demodulation (Demo1) zulässt, welche einer der Entspreizungen des Spektrums entspricht, die den Erhalt eines dritten demodulierten Signals (S3) ermöglicht;

- durch einen Rechner realisierte Leistungsmessungen, umfassend:

  - eine erste Messung der Leistung des Signals ($P_{R2}$(SM3)), das vom zweiten Empfänger (R2) der zweiten terrestrischen Station vor der Demodulation per Entspreizung des Spektrums empfangen wurde;
  - eine zweite Messung der Leistung des dritten demodulierten Nutzsignals ($P_{R2}$(S3)) nach der Entspreizung des Spektrums des dritten empfangenen Signals (SM3),

- eine Berechnung der Faktoren (RX($\theta$i), (Tx($\alpha_i$)) der Leistungsverluste, darunter:

  - ein erster Faktor (RX($\theta_i$), der die Leistungsverluste darstellt, die mit der ersten Ausrichtung ($\theta_i$) auf der Aufwärtsverbindung verbunden sind, wobei der erste Faktor ausgehend von einem ersten unveränderlichen Verhältnis (K1) ausgehend von den Leistungsmessungen berechnet wird;
  - ein zweiter Faktor (Tx($\alpha_i$)), der die Leistungsverluste darstellt, die mit der zweiten Ausrichtung ($\alpha_i$) auf der Abwärtsverbindung verbunden sind.

2. Verfahren gemäß Anspruch 1, **dadurch gekennzeichnet, dass** der zweite Faktor (Tx($\alpha_i$)) durch Berechnung des Verhältnisses zwischen der Leistung ($P_0$), die von einer zweiten Sendeantenne (ANT2) des zweiten Senders (F2) des Satelliten (SAT) ausgegeben wird, und der Gesamtleistung ($P_{R2}$(SM2)) des Signals (SM2), das vom Satelliten (SAT) ausgegeben und am zweiten Empfänger (R2) der zweiten terrestrischen Station (ST2) empfangen wird, berechnet wird.

3. Verfahren gemäß Anspruch 2, **dadurch gekennzeichnet, dass** der erste Faktor (Rx($\theta_i$)) in Abhängigkeit von dem ersten Verhältnis (K1) berechnet wird, wobei das erste Verhältnis (K1) das Verhältnis zwischen der Leistung des Nutzsignals ($P_{R1}$(SM$_U$) und der Leistung der Interferenzen ($P_{R1}$(J1)) ist, die an der ersten Antenne (ANT1) des ersten Empfängers (R1) des Satelliten (SAT) empfangen werden.

4. Verfahren gemäß Anspruch 2, **dadurch gekennzeichnet, dass** das erste Verhältnis (K1) während einer vorbestimmten Dauer unveränderlich ist und das erste Verhältnis (K1) gleich dem Verhältnis zwischen der Leistung des Nutzsignals ($P_{R2}$(SMu)), das am zweiten Empfänger (R2) berechnet wird, und der Leistung der Interferenzen ($P_{R2}$(J1)) ist, die an der Antenne (11) des zweiten Senders der zweiten terrestrischen Station (ST2) empfangen werden.

5. Verfahren gemäß Anspruch 2 bis 4, **dadurch gekennzeichnet, dass** der erste Faktor (Rx($\theta_i$)) in Abhängigkeit von dem ersten Verhältnis (K1) der ersten Leistung ($P_0$) und der Leistung des Nutzsignals ($P_{E1}$(SMu)) berechnet wird, das am ersten Sender (E1) der Sendeantenne (10) der zweiten Station am Boden (ST2) berechnet wird.

6. Verfahren gemäß Anspruch 2 bis 5, **dadurch gekennzeichnet, dass** das erste Verhältnis (K1) ausgehend von den folgenden Messungen realisiert ist:

   - einer ersten Messung der Leistung des Signals ($P_{R2}$(SM3)), das von der Antenne (11) des zweiten Senders (R2) vor der Demodulation per Entspreizung des Spektrums empfangen wurde;
   - einer zweiten Messung der Leistung des dritten demodulierten Nutzsignals ($P_{R2}$(S3) nach der Entspreizung des Spektrums des dritten empfangenen Signals (SM3);
   - einer dritten Messung der Leistung der Interferenzeren ($P_{R2}$(J1)), die von der Antenne (11) des zweiten Empfängers (R2) nach Eingang des dritten Signals (SM3) empfangen wurden;
   - einer vierten Messung des ersten Faktors ($K_1$), der der Quantifizierung des Verhältnisses zwischen der Leistung des modulierten Nutzsignals ($P_{R1}$(SMu)) und der Leistung der Interferenzen ($P_{R1}$(J1)) entspricht, die vom ersten Empfänger (R1) des Satelliten empfangen werden.

7. Verfahren gemäß Anspruch 1 bis 6, **dadurch gekennzeichnet, dass** die Ausgabe durch den ersten Sender (E1) und der Empfang durch den zweiten Empfänger (R2) an denselben geographischen Koordinaten innerhalb einer und derselben terrestrischen Station (ST1, ST2) durchgeführt werden.

8. Verfahren gemäß Anspruch 1 bis 7, **dadurch gekennzeichnet, dass** das Referenz-Nutzsignal eine Folge von Bits ist, die bei einer Geschwindigkeit von 200 bps bis 10 kbps übertragen wird.

9.  Verfahren gemäß Anspruch 1 bis 8, **dadurch gekennzeichnet, dass** der erste und zweite Sendekanal eine zwischen 20 und 120 MHz inbegriffene Bandbreite haben und dass die zentrale Frequenz des ersten und zweiten Kanals zwischen 1 GHz und 40 GHz inbegriffen ist.

10. Verfahren gemäß Anspruch 1 bis 9, **dadurch gekennzeichnet, dass** die erste Modulation per Spektrumsverteilung einen zwischen 10 und 60 MHz inbegriffenen Codierungssatz umfasst.

11. Verfahren gemäß Anspruch 1 bis 10, **dadurch gekennzeichnet, dass** die Modulation per Spektrumsverteilung durch die Nutzung einer Pseudogeräusch-Sequenz realisiert wird.

12. Verfahren zur Erzeugung einer Gruppe von Messungen für die Herstellung der Kartographie eines Sendediagramms der zweiten Sendeantenne (ANT2) des Satelliten gemäß Anspruch 1 bis 11, **dadurch gekennzeichnet, dass**:

- die Konfigurationsstufe umfasst:

  - eine Definition eines Abdeckbereichs (Z) einer Antenne, die eine terrestrische Fläche definiert;
  - die Definition einer Ausrichtungssequenz ($\{\alpha_i\}_{i\square[1\,;\,Nj}$) der zweiten Antenne (ANT2) des zweiten Nutzsenders, die eine Probennahme von Punkten des Abdeckbereichs (Z) definiert, wobei jede Ausrichtung ($\alpha_i$) durch einen Schlinger-Sollwert und einen Schleifen-Sollwert im Verhältnis zu einer Referenzausrichtung definiert ist.

- die Messstufe des zweiten Faktors ($Tx(\alpha_i)$) gemäß Anspruch 1 bis 11 für jede Ausrichtung der Sequenz wiederholt wird.

13. Verfahren zur Erzeugung einer Gruppe von Messungen zur Herstellung der Kartographie eines Empfangsdiagramms der ersten Empfangsantenne (R1) des Satelliten gemäß Anspruch 1 bis 12, **dadurch gekennzeichnet, dass**:

- die Stufe umfasst:

  - eine Definition eines Abdeckbereichs (Z) einer eine terrestrische Fläche definierenden Antenne;
  - die Definition einer Ausrichtungssequenz ($\{\theta_i\}_{i\square[1;Nj}$) der ersten Antenne (ANT1) des ersten Empfängers (R1) des Satellits, der eine Probennahme von Punkten des Abdeckbereichs (Z) definiert, wobei jede Ausrichtung ($\theta_i$) durch einen Schlinger-Sollwert und einen Schleifen-Sollwert im Verhältnis zu einer Referenzausrichtung definiert ist;
  - die Messstufe des ersten Faktors ($RX(\theta_i)$) gemäß Anspruch 1 bis 11 für jede Ausrichtung der Sequenz wiederholt wird.

## Claims

1.  Method for measuring antenna gains (R1, E2) of a satellite to help in generating at least one radiation diagram including:

- a configuration comprising:

  - a definition of a useful reference signal (Su);
  - a definition of a first transmission channel for setting up communications:

    • firstly, between a first transmitter (E1) of a first ground station (ST1) and a first receiver (R1) of a first satellite (SAT) and;
    • secondly, between a second transmitter (E2) of the first satellite (SAT) and a second receiver (R2) of a second ground station (ST2);

  - a definition of a first modulation (Mod1) of the useful signal by spectrum spreading occupying a frequency band with frequencies adapted to the first channel;
  - configuration of a first orientation ($\theta_i$) of the first antenna (ANT1),

- setting up a transmission comprising:

  - an uplink including transmission of the useful signal (Su) modulated according to the first modulation (Mod1) by the first transmitter (E1) generating a useful modulated signal (SMu) to the first receiver (R1) with a reception system receiving a first signal (SM1), the first signal (SM1) comprising interference (J1) and the useful modulated signal (SMu), said reception system being coupled to the second transmitter (E2) of the first satellite;
  - amplification of the first total signal (SM1) by an amplification system (ALC, TWT) with variable gain (Gx) that can maintain a level of a first power ($P_0$) of a second signal (SM2) at the output from the second transmitter (E2) at a predefined constant value, the input power of the first total signal (SM1) or the variable gain (Gx) being known at each instant;
  - a downlink comprising transmission of the second signal (SM2) by the second transmitter (E2) to the second receiver (R2) of the second ground station (ST2), the second receiver comprising a system for reception of a third signal (SM3) to make a first demodulation (Demod1) corresponding to spectrum despreading to obtain a third demodulated signal (S3);

- power measurements made by a computer including:

  - a first measurement of the signal power ($P_{R2}$(SM3)) received by the second receiver (R2) of the second ground station before demodulation by spectrum despreading;
  - a second measurement of the power of the third useful demodulated signal ($P_{R2}$(SM3)) after spectrum despreading of the third received signal (SM3);

- calculation of power loss factors (Rx($\theta_i$), (Tx($\alpha i$)), including:

  - a first factor (Rx($\theta_i$)) representing power losses related to the first orientation ($\theta_i$) on the uplink, the first factor being calculated from a first invariable ratio (K1) from power measurements;
  - a second factor (Tx($\alpha i$)) representing power losses related to the second orientation ($\alpha i$) on the downlink.

2. Method according to claim 1, **characterised in that** the second factor (Tx($\alpha_i$)) is obtained by calculating the ratio between the power ($P_0$) transmitted by a second transmission antenna (ANT2) of the second transmitter (E2) of the satellite (SAT) and the total power ($P_{R2}$ (SM2)) of the signal (SM2) transmitted by the satellite (SAT) and received at the second receiver (R2) of the second ground station (ST2).

3. Method according to claim 2, **characterised in that** the first factor (Rx($\theta_i$)) is calculated as a function of the first ratio (K1), said first ratio (K1) being the ratio between the power ($P_{R1}$(SMu) of the useful signal and the power ($P_{R1}$(J1)) of the interference received at the first antenna (ANT1) of the first receiver (R1) of the satellite (SAT).

4. Method according to claim 2, **characterised in that** the first ratio (K1) is invariable during a predetermined period, and **in that** the first ratio (K1) is equal to the ratio between the power ($P_{R2}$(SMu)) of the useful signal calculated at the second receiver (R2) and the power of interference ($P_{R2}$(J1)) received at the antenna (11) of the second receiver of the second ground station (ST2).

5. Method according to any one of claims 2 to 4, **characterised in that** the first factor (Rx($\theta i$)) is calculated as a function of the first ratio (K1), the first power ($P_0$) and the power ($P_{E1}$(SMu)) of the transmitted useful signal calculated at the first transmitter (E1) of the transmission antenna (10) of the second ground station (ST2).

6. Method according to any one of claims 2 to 5, **characterised in that** the first ratio (K1) is determined from the following measurements:

  - a first measurement of the signal power ($P_{R2}$(SM3)) received by the antenna (11) of the second receiver (R2) before demodulation by spectrum despreading;
  - a second measurement of the power ($P_{R2}$(S3)) of the third demodulated useful signal after spectrum despreading of the third received signal (SM3);
  - a third measurement of the power ($P_{R2}$(J1)) of interference received by the antenna (11) of the second receiver (R2) after reception of the third signal (SM3);
  - a fourth measurement of the first factor ($K_1$) corresponding to quantification of the ratio between the power of the modulated useful signal ($P_{R1}$(SMu)) and the power ($P_{R1}$(J1)) of interference received by the first receiver (R1) of the satellite.

7. Method according to any one of claims 1 to 6, **characterised in that** transmission by the first transmitter (E1) and reception by the second receiver (R2) take place at the same geographic coordinates in a single ground station (ST1, ST2).

8. Method according to any one of claims 1 to 7, **characterised in that** the useful reference signal is a stream of bits transmitted at a rate of between 200 bps and 10 kbps.

9. Method according to any one of claims 1 to 8, **characterised in that** the first and second transmission channels have a band width of between 20 and 120 MHz and **in that** the central frequency of the first and second channels is between 1 GHz and 40 GHz.

10. Method according to any one of claims 1 to 9, **characterised in that** the first modulation by spectrum spreading includes an encoding rate of between 10 and 60 MHz.

11. Method according to any one of claims 1 to 10, **characterised in that** modulation by spectrum spreading is done by the use of a pseudo-noise sequence.

12. Method of generating a set of measurements to set up mapping of a transmission diagram from the second transmission antenna (ANT2) of the satellite according to any one of claims 1 to 11, **characterised in that**:

  - the configuration step includes:

    - definition of a coverage zone (Z) of an antenna defining a ground surface;
    - definition of a sequence of orientations ($\{\alpha_i\}_{i \in [1 ; Nj}$) of the second antenna (ANT2) of the second satellite transmitter defining a sample of points in the coverage zone (Z), each orientation ($\alpha_i$} being defined by a set roll value and a set yaw value relative to a reference orientation;

    - the step to measure the second factor ($Tx(\alpha_i)$) according to any one of claims 1 to 11 is reiterated for each orientation in the sequence.

13. Method of generating a set of measurements to set up mapping of a reception diagram of the first reception antenna (R1) of the satellite according to any one of claims 1 to 12, **characterised in that**:

  - the configuration step includes:

    - definition of a coverage zone (Z) of an antenna defining a ground surface;
    - definition of a sequence of orientations ($\{\theta_i\}_{i \in [1;Nj}$) of the first antenna (ANT1) of the first receiver (R1) of the satellite defining a sample of points in the coverage zone (Z), each orientation ($\theta_i$) being defined by a set roll value and a set yaw value relative to a reference orientation;

    - the step to measure the first factor ($Rx(\theta_i)$) according to any one of claims 1 to 11 is reiterated for each orientation in the sequence.

FIG. 1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5697050 A